# FASCICULE DE BREVET EUROPEEN

(11) **EP 2 007 596 B1**
(45) Date de publication et mention de la délivrance du brevet: **06.07.2016**
(21) Numéro de dépôt: 07727579.0
(22) Date de dépôt: 30.03.2007
(51) Int. Cl.: B60C 23/04, B29D 30/00

(54) **DISPOSITIF DE FIXATION D'UN MODULE SUR LA PAROI INTERNE D'UN PNEUMATIQUE**
VORRICHTUNG ZUM BEFESTIGEN EINES MODULS AN DER INNENWANDUNG EINES REIFENS
DEVICE FOR FIXING A MODULE ON THE INNER WALL OF A TYRE

(30) Priorité: 04.04.2006 FR 0603075
(43) Date de publication de la demande: 31.12.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: DURIF, Pierre, 63530 Enval (FR); PAUL, Xavier, 63400 Chamalieres (FR); HICKS, Patrick, T., Taylors, South Carolina 29687 (US); MARTIN, Terry, James, Duncan, South Carolina 29605 (US)
(74) Mandataire: Le Cam, Stéphane Georges Elie
(86) Numéro de dépôt international: PCT/EP2007/053107
(87) Numéro de publication internationale: WO 2007/113251

(56) Documents cités:
- WO-A-99/41093
- WO-A-2005/044600
- DE-U1-202005 005 144

## Description

L'invention est relative à un dispositif de fixation d'un module sur la paroi interne d'un pneumatique et plus spécifiquement à un dispositif de fixation d'un module électronique.

L'utilisation de modules électroniques dans les pneumatiques peut permettre une multitude d'applications consistant à acquérir, stocker et/ou transmettre des informations dans le but de suivre l'utilisation du pneumatique, et notamment de renseigner sur l'évolution des performances du pneumatique durant sa durée de vie.

De tels modules électroniques peuvent comprendre des composants passifs tels des puces d'identification ou RFID, et/ou des composants actifs reliés à un système autonome d'alimentation en énergie électrique tel que des batteries ou encore un système à couplage inductif. Ces modules électroniques peuvent être conçus pour échanger des informations avec des modules externes, servant par exemple d'interface avec l'usager, par l'intermédiaire d'ondes radio dont la fréquence et la puissance sont soigneusement ajustées et selon des protocoles de transmission spécifiques. Ils peuvent encore être prévus pour stocker des informations pour être interrogés ultérieurement, par exemple pour analyser l'usage du pneumatique. Les modules électroniques sont généralement disposés à l'intérieur de boîtiers de protection souple ou rigide, destinés à préserver les composants électroniques des agressions liées aux chocs, et à l'ambiance régnant dans le pneumatique, notamment du fait de la présence de fluide, par exemples à vocations anti-oxydante ou anti-crevaison, et à son environnement.

Un tel module électronique, peut notamment être fixé à l'intérieur de la cavité formée par le pneumatique une fois monté sur la roue ; pour cela il peut être disposé sur un grand nombre de supports. Ainsi il peut être fixé à la valve, fixé sur la jante, fixé ou collé sur la paroi intérieure du pneumatique ou encore être intégré aux composants du pneumatique. Le choix d'une de ces solutions dépend de la nature du pneumatique, des sollicitations qu'il peut endurer, de la nature de la source d'énergie du module électronique, des informations que l'on désire suivre et de l'accessibilité souhaitée en cas de maintenance. L'invention est relative au cas d'un module électronique fixé sur la paroi interne du pneumatique.

Lorsque le module électronique est ainsi associé au pneumatique, le mode de fixation choisi doit assurer le maintien en position du module quelles que soient la vitesse de rotation et les conditions d'usage de l'enveloppe.

Des solutions de fixation permettant de répondre à ces exigences ont déjà été décrites par exemple dans les publications EP 0 936 089, US 6 255 940, US 6 462 650 ou encore WO 2005044600, qui décrivent des systèmes de fixation d'un module sur la paroi intérieure d'un pneumatique. Ces dispositifs sont composés d'une semelle souple dont une face sert de liaison avec la paroi intérieure du pneumatique et dont l'autre face comporte un moyen de fixation coopérant avec les moyens d'attache disposés sur le module. Le document WO 99/41093 décrit en particulier un dispositif de fixation d'un module sur la paroi interne d'un pneumatique, constitué d'une embase solidaire du pneumatique et d'une bande souple, l'embase comportant des moyens de fixation de ladite bande, la bande comportant des moyens de blocage du module. Le document EP 1707406 B1 (DE 202005005144) décrit également un dispositif de fixation d'un module sur la paroi interne d'un pneumatique.

Bien que non limitée à ce type d'application, l'invention sera plus particulièrement décrite en référence à des modules électroniques dont l'épaisseur est supérieure ou égale à 2 cm et présentant une base de longueur au moins égale à 4 cm et de largeur au moins égale à 2cm et destinés à être insérés dans des pneumatiques pour véhicule de type dumper et présentant une largeur axiale supérieure à 37 pouces.

Dans le cas de ce type de véhicules, notamment destinés à des usages dans des mines ou carrières pour le transport de charges, les dimensions des pneumatiques associées aux charges qu'ils supportent en roulage conduisent à des flèches des pneumatiques de l'ordre de 30 % ; Ils peuvent notamment subir des augmentations de charge supérieur à 50% du fait de surcharges dynamiques liées par exemple à des freinages pour des véhicules de type chargeuse ou bien par exemple à des déformations des pistes de circulation dans le cas des véhicules de type dumper.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

Le pneumatique subit ainsi dans cette zone des contraintes radiales. Celles-ci sont combinées à des contraintes longitudinales du fait notamment de la déradialisation du pneumatique dans la zone de l'aire de contact. La combinaison de ces contraintes se traduit notamment par des déformations des parois du pneumatique.

Ces déformations combinées par exemple à des modules électroniques tels que ceux précités dont l'épaisseur est relativement importante nécessitent des moyens de fixation plus adaptés pour garantir la pérennité de la fixation. En effet, les dispositifs précités présentent des faiblesses du fait des sollicitations particulièrement importantes liées au type de module et au type de pneumatique.

Les inventeurs se sont ainsi donnés pour mission de définir un dispositif de fixation d'un module électronique permettant de garantir la pérennité de ladite fixation y compris dans le cas d'un module tel que celui décrit précédemment et présentant une épaisseur au moins égale à 2 cm, celui-ci étant fixé dans un pneumatique pouvant supporter des flèches de l'ordre de 30 %.

Ce but a été atteint selon l'invention par un dispositif de fixation d'un module sur la paroi interne d'un pneumatique, ledit dispositif étant constitué d'une embase solidaire du pneumatique et d'une bande souple, l'embase comportant des moyens de fixation de ladite bande, les extrémités de la bande comportant au moins deux moyens indépendants d'accrochage du module et la bande comportant des moyens de blocage du module.

Il est apparu que le dispositif ainsi décrit selon l'invention permet effectivement de conserver le module dans son emplacement y compris lors de grandes sollicitations du fait de l'utilisation du pneumatique. Il semble en effet que la nature souple de la bande qui permet notamment d'absorber certaines sollicitations associée à un accrochage par des moyens indépendants qui permettent de diviser au moins localement les contraintes dues aux sollicitations permettent de garantir la pérennité de l'accrochage du module dans le pneumatique. Il apparaît en outre que ce type d'accroche est particulièrement bien adapté à un module relativement épais tant du point de vue de sa mise en place que de son maintien.

Selon un mode de réalisation préféré, la bande souple est amovible. Cela présente un avantage en terme de réalisation ; il est en effet ainsi possible de préparer ou réaliser le dispositif en deux temps : mise en place de l'embase qui est rendue solidaire du pneumatique puis mise en place de la bande. En outre, cela peut encore permettre de remplacer la bande pour tout type de raison, l'embase étant conservée.

Selon un mode de réalisation avantageux de l'invention, les moyens de fixation de la bande sur l'embase sont obtenus par deux ouvertures dans l'embase formant un passant et permettant le passage de la bande. Ce mode de réalisation est particulièrement avantageux de par sa simplicité de réalisation et de par son utilisation. Les ouvertures dans l'embase peuvent par exemple être réalisées au moment de la fabrication de ladite embase. Lorsque celle-ci est réalisée en un matériau polymérique tel que du caoutchouc, au moment de sa réticulation, ou vulcanisation, on prévoit par exemple un insert sur lequel le caoutchouc n'adhère pas, qui est ensuite retiré pour laisser apparaître deux ouvertures formant ledit passant.

De préférence selon l'invention, les moyens d'accrochage de chacune des extrémités de la bande souple sont des moyens complémentaires de moyens prévus sur le module. Une telle réalisation permet notamment de simplifier la phase d'accrochage du module.

De préférence encore, les moyens d'accrochage de chacune des extrémités de la bande sont des ouvertures. Cette réalisation préférée de la bande souple permet d'accrocher une extrémité de ladite bande à une protubérance du module.

Une réalisation avantageuse de l'invention prévoit que les moyens de blocage du module sont des efforts exercés par ladite bande.

Selon un premier mode de réalisation, les efforts exercés par ladite bande sont des efforts de rappel élastiques. Selon cette réalisation, le blocage du module est obtenu dès que l'accrochage dudit module est réalisé.

Selon un deuxième mode de réalisation, les efforts exercés par ladite bande sont obtenus par thermorétractation de la bande. Pour cela, la bande est avantageusement réalisée dans un matériau adapté et la bande est chauffée dès que l'accrochage du module est effectué.

Une variante préférée de réalisation de l'invention prévoit encore que l'embase est réalisée en un matériau polymérique réticulé sur le pneumatique. Avantageusement encore, la réticulation de l'embase est obtenue simultanément à la réticulation, notamment vulcanisation, du pneumatique. Selon cette variante de réalisation de l'invention, la fabrication du pneumatique comportant une embase est réalisée plus rapidement et la fixation de l'embase est parfaitement solidaire de la paroi interne du pneumatique.

Avantageusement encore, la bande souple est constituée d'un matériau polymérique. Avantageusement ce matériau n'est pas renforcé pour garantir la souplesse et les forces de blocage conformes à l'invention.

D'autres détails et caractéristiques avantageux de l'invention ressortiront ci-après de la description d'exemples de réalisation de l'invention en référence aux figures 1 à 3 qui représentent :
- figure 1, une représentation schématique d'un dispositif selon l'invention,
- figures 2a à 2c, une représentation schématique selon un premier mode de réalisation d'un dispositif selon l'invention,
- figures 3a à 3c, une représentation schématique selon un deuxième mode de réalisation d'un dispositif selon l'invention.

Les figures ne sont pas représentées à l'échelle pour en simplifier la compréhension.

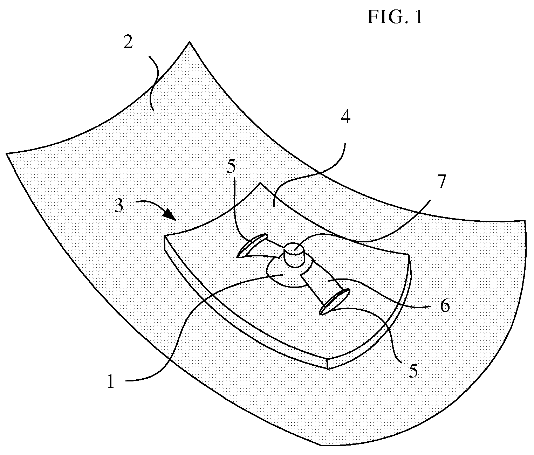

La Figure 1 représente un module électronique 1 fixé sur la paroi interne 2 d'un pneumatique à l'aide d'un dispositif de fixation 3. Le dispositif de fixation 3 est lui-même composé d'une embase 4 solidaire du pneumatique prévue avec deux ouvertures 5 dans lesquelles passe une bande souple 6.

L'embase 4 peut par exemple être réalisée lors de la confection du pneumatique, une ou plusieurs couches de caoutchouc la constituant étant mises en place puis cuites simultanément à la cuisson du pneumatique. La formation des deux ouvertures 5 peut être obtenu par la présence d'un élément mis en place lors de la cuisson. Un tel élément est réalisé en tout matériau connu de l'homme du métier sur lequel le caoutchouc n'adhère pas qui est inséré entre deux couches de caoutchouc et dont les extrémités sont positionnées pour obtenir les deux ouvertures recherchées.

Selon un autre mode de réalisation, l'embase 4 peut être réalisée en caoutchouc par moulage au préalable et rapportée dans le pneumatique avant la cuisson de celui-ci. L'embase 4 est alors déjà cuite et la liaison est obtenue par interposition d'une interface entre l'embase 4 et le pneumatique qui va permettre d'obtenir une liaison entre embase et pneumatique lors de la cuisson de celui-ci.

Selon un dernier mode de réalisation, l'embase 4 peut être réalisée en caoutchouc par moulage au préalable en ne subissant qu'une cuisson partielle permettant de conserver la base, c'est-à-dire la partie de l'embase destinée à venir au contact du pneumatique, non réticulée. L'embase ainsi obtenue est mise en place sur le pneumatique avant la cuisson de celui-ci et la liaison entre embase et pneumatique est ainsi obtenue lors de la cuisson du pneumatique. Selon ce mode de réalisation, il est toutefois prudent de limiter les temps de conservation des embases préfabriquées et partiellement réticulées.

L'embase 4 est avantageusement réalisée en caoutchouc non renforcé pour mieux supporter toutes les déformations du pneumatique. Si la présence d'éléments de renforcement est toutefois requise, ceux-ci sont avantageusement des éléments de renforcement élastiques.

La bande souple 6 est également réalisée en caoutchouc non renforcé et comporte à chacune de ses extrémités des moyens d'accrochage du module électronique 1. La bande souple 6 est fabriquée indépendamment et rapportée lors de la mise en place du module électronique 1. Elle est glissée par l'une des ouvertures 5 pour ressortir par l'autre de sorte que la partie supérieure de l'embase 4 située entre les deux ouvertures 5 forme un passant qui retient la bande souple 6 qui vient former une boucle fermée par le sommet du module électronique 1.

Le module électronique 1 comporte une tête de mesure 7, par exemple de mesure de pression, à son sommet. Pour garantir des mesures non perturbées, il est préférable que la tête de mesure 7 ne soit pas recouverte par les moyens d'accrochage liés à la bande souple 6. Chacune des extrémités de la bande souple 6 comportant des moyens d'accrochage, il est possible de fixer le module sans recouvrir la tête de mesure 7 du module électronique 1.

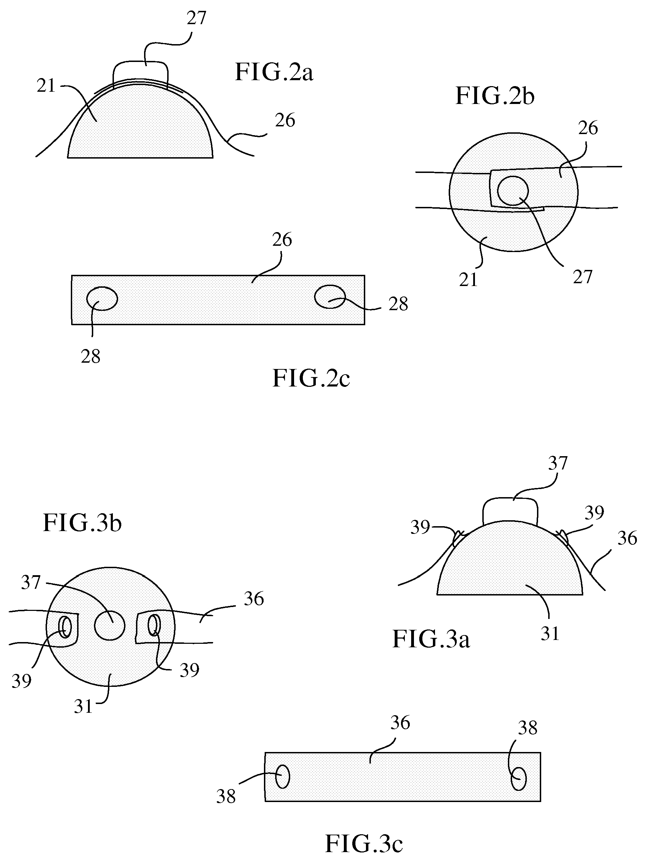

Les figures 2 et 3 illustrent deux exemples de réalisation de l'invention.

Sur les figures 2a et 2b, le module électronique 21 et les extrémités de la bande souple 26 sont représentés selon respectivement une vue de côté et une vue de dessus. Chacune des extrémités de la bande 26 vient s'arrimer sur le module 21 par accrochage au niveau de la tête de mesure 27 sans couvrir celle-ci. Comme montré sur la figure 2c, les extrémités de la bande 26 comporte chacune une ouverture 28 sensiblement de la dimension de la tête de mesure 27. Dans le cas de la figure 2, la tête de mesure est circulaire et les ouvertures 28 sont également circulaires et présentent un diamètre sensiblement équivalent à celui de la tête de mesure.

Les essais ont montré qu'un tel dispositif permet un bon accrochage du module. La bande 26 réalisée en caoutchouc non renforcé présente avantageusement des propriétés élastiques, qui associés au système d'accrochage, sont suffisantes pour bloquer le module électronique 21. Les essais de roulage ont effectivement montré que, le pneumatique étant soumis à des sollicitations importantes du fait de déformation lors de passage sur des sols caillouteux, le module électronique reste en place et que le dispositif de fixation n'a pas été endommagé.

Selon cette première variante de réalisation de l'invention, la bande souple 26 peut optionnellement comporter des zones recouvertes d'un matériau de type tissus velcros pour permettre un accrochage d'une extrémité de la bande 26 sur l'autre dans les zones de recouvrement de ces deux extrémités. Cet accrochage par velcros peut se trouver notamment de part et d'autre de la tête de mesure. Cette option peut présenter l'avantage de ne pas laisser libre une extrémité et ainsi mieux la maintenir et éviter qu'elle ne se détache de la tête de mesure 27 lors des déformations du pneumatique. Elle peut encore permettre une meilleure répartition des contraintes qui s'exercent pour bloquer le module 21. Selon une autre option la bande souple 26 est réalisée en un matériau de type tissus velcros pour permettre l'accrochage entre elles des extrémités dans les zones de recouvrement de ces deux extrémités.

Les figures 3a, 3b, 3c montrent une variante de réalisation d'un dispositif de fixation selon l'invention prévu pour fixer un module électronique 31 comportant des appendices 39 permettant l'accrochage des extrémités de la bande souple 36 par l'intermédiaire des ouvertures 38.

Selon cette variante de réalisation, les essais ont montré des résultats tout à fait similaires au cas précédent. Cette solution peut présenter l'avantage de ne jamais toucher ou même effleurer la tête de mesure 37 lors de l'accrochage de la bande 36.

Des essais ont été réalisés sur un pneumatique de dimension 40.00R57 monté sur un véhicule de type CAT 793 dans lequel a été fixé un module de type capteur de pression dont les dimensions extérieures sont 9 cm de longueur, 5cm de largeur et 3 cm d'épaisseur.

Ce module a été fixé avec un dispositif tel que décrit sur les figures 2, l'embase étant fixée sur la paroi interne du pneumatique au cours de la fabrication de celui-ci. L'embase étant en caoutchouc, elle a été vulcanisée simultanément au pneumatique. Le module est ensuite fixé à l'aide d'une bande en caoutchouc dont les deux extrémités viennent s'accrocher sur la tête de mesure. Les extrémités sont en outre fixées l'une à l'autre par un tissu velcros présent sur chacune.

Des roulages ont été effectués sur un terrain comportant des cailloux et des ornières reproduisant le sol que peuvent rencontrer les pneumatiques équipant des véhicules circulant dans des mines. Les flèches observées durant le roulage ont pu atteindre 50 % en surcharge dynamique.

Les résultats obtenus ont permis de valider l'efficacité du dispositif de fixation selon l'invention, notamment en terme de tenue dans le temps lors de roulages.

## Revendications

1. - Dispositif de fixation (3) d'un module (1) sur la paroi interne (2) d'un pneumatique, constitué d'une embase (4) solidaire du pneumatique et d'une bande souple (6, 26, 36), l'embase (4) comportant des moyens de fixation (5) de ladite bande (6, 26, 36), la bande (6, 26, 36) comportant des moyens de blocage du module, **caractérisé en ce que** chacune des extrémités de la bande (26, 36) comporte au moins un moyen indépendant d'accrochage (28, 38) du module.

2. - Dispositif de fixation (3) selon la revendication 1, **caractérisé en ce que** la bande souple (6, 26, 36) est amovible.

3. - Dispositif de fixation (3) selon la revendication 1 ou 2, **caractérisé en ce que** les moyens de fixation (5) de la bande (6, 26, 36) sur l'embase (4) sont obtenus par deux ouvertures dans l'embase permettant le passage de la bande.

4. - Dispositif de fixation (3) selon l'une des revendications 1 à 3, **caractérisé en ce que** les moyens d'accrochage (28, 38) de chacune des extrémités de la bande (26, 36) sont des moyens complémentaires de moyens (27, 39) prévus sur le module (21, 31).

5. - Dispositif de fixation (3) selon la revendication 4, **caractérisé en ce que** les moyens d'accrochage (28, 38) de chacune des extrémités de la bande (26, 36) sont des ouvertures.

6. - Dispositif de fixation (3) selon l'une des revendications précédentes, **caractérisé en ce que** les moyens de blocage du module sont des efforts exercés par ladite bande (6, 26, 36).

7. - Dispositif de fixation (3) selon la revendication 6, **caractérisé en ce que** les efforts exercés par ladite bande (6, 26, 36) sont des efforts de rappel élastiques.

8. - Dispositif de fixation (3) selon la revendication 6, **caractérisé en ce que** les efforts exercés par ladite bande (6, 26, 36) sont obtenus par thermorétractation de la bande.

9. - Dispositif de fixation (3) selon l'une des revendications précédentes, **caractérisé en ce que** l'embase (4) est réalisée en un matériau polymérique réticulé sur le pneumatique.

10. - Dispositif de fixation (3) selon l'une des revendications précédentes, **caractérisé en ce que** la bande souple (6, 26, 36) est constituée d'un matériau polymérique.

## Patentansprüche

1. Vorrichtung (3) zur Befestigung eines Moduls (1) an der Innenwand (2) eines Luftreifens, die aus einer fest mit dem Luftreifen verbundenen Grundplatte (4) und aus einem weichen Band (6, 26, 36) besteht, wobei die Grundplatte (4) Befestigungsmittel (5) des Bands (6, 26, 36) aufweist, wobei das Band (6, 26, 36) Mittel zum Blockieren des Moduls aufweist, **dadurch gekennzeichnet, dass** jedes der Enden des Bands (26, 36) mindestens ein unabhängiges Mittel (28, 38) zum Einhaken des Moduls aufweist.

2. Befestigungsvorrichtung (3) nach Anspruch 1, **dadurch gekennzeichnet, dass** das weiche Band (6, 26, 36) entfernbar ist.

3. Befestigungsvorrichtung (3) nach Anspruch 1 oder 2, **dadurch gekennzeichnet, dass** die Befestigungsmittel (5) des Bands (6, 26, 36) an der Grundplatte (4) durch zwei Öffnungen in der Grundplatte erhalten werden, die den Durchgang des Bands erlauben.

4. Befestigungsvorrichtung (3) nach einem der Ansprüche 1 bis 3, **dadurch gekennzeichnet, dass** die Einhakmittel (28, 38) jedes der Enden des Bands (26, 36) zu auf dem Modul (21, 31) vorgesehenen Mitteln (27, 39) komplementäre Mittel sind.

5. Befestigungsvorrichtung (3) nach Anspruch 4, **dadurch gekennzeichnet, dass** die Einhakmittel (28, 38) jedes der Enden des Bands (26, 36) Öffnungen sind.

6. Befestigungsvorrichtung (3) nach einem der vorhergehenden Ansprüche, **dadurch gekennzeichnet, dass** die Blockiermittel des Moduls vom Band (6, 26, 36) ausgeübte Kräfte sind.

7. Befestigungsvorrichtung (3) nach Anspruch 6, **dadurch gekennzeichnet, dass** die vom Band (6, 26, 36) ausgeübten Kräfte elastische Rückstellkräfte sind.

8. Befestigungsvorrichtung (3) nach Anspruch 6, **dadurch gekennzeichnet, dass** die vom Band (6, 26, 36) ausgeübten Kräfte durch Wärmeschrumpfen des Bands erhalten werden.

9. Befestigungsvorrichtung (3) nach einem der vorhergehenden Ansprüche, **dadurch gekennzeichnet, dass** die Grundplatte (4) aus einem vernetzten Polymermaterial auf dem Luftreifen hergestellt ist.

10. Befestigungsvorrichtung (3) nach einem der vorhergehenden Ansprüche, **dadurch gekennzeichnet, dass** das weiche Band (6, 26, 36) aus einem Polymermaterial besteht.

## Claims

1. Device (3) for fixing a module (1) to the internal wall (2) of a tyre, consisting of a support (4) secured to the tyre and of a flexible strip (6, 26, 36), the support (4) including means (5) for fixing said strip (6, 26, 36), the strip (6, 26, 36) having means for immobilizing the module, **characterized in that** each of the ends of the strip (26, 36) has at least one independent means (28, 38) for attaching the module.

2. Fixing device (3) according to Claim 1, **characterized in that** the flexible strip (6, 26, 36) is removable.

3. Fixing device (3) according to Claim 1 or 2, **characterized in that** the means (5) for fixing the strip (6, 26, 36) to the support (4) are obtained by two openings in the support, allowing the strip to pass through them.

4. Fixing device (3) according to one of Claims 1 to 3, **characterized in that** the means (28, 38) for attaching each of the ends of the strip (26, 36) are means complementary to means (27, 39) provided on the module (21, 31).

5. Fixing device (3) according to Claim 4, **characterized in that** the means (28, 38) for attaching each of the ends of the strip (26, 36) are openings.

6. Fixing device (3) according to one of the preceding claims, **characterized in that** the means for immobilizing the module are forces exerted by said strip (6, 26, 36).

7. Fixing device (3) according to Claim 6, **characterized in that** the forces exerted by said strip (6, 26, 36) are elastic restoring forces.

8. Fixing device (3) according to Claim 6, **characterized in that** the forces exerted by said strip (6, 26, 36) are obtained by the thermal contraction of the strip.

9. Fixing device (3) according to one of the preceding claims, **characterized in that** the support (4) is made of a polymeric material crosslinked on the tyre.

10. Fixing device (3) according to one of the preceding claims, **characterized in that** the flexible strip (6, 26, 36) is formed from a polymeric material.
